# EUROPEAN PATENT APPLICATION

(11) **EP 4 060 437 A1**
(43) Date of publication of application: **21.09.2022**
(21) Application number: 20899629.8
(22) Date of filing: 27.11.2020
(51) Int. Cl.: G05B 19/414, G05B 19/418

(54) **MACHINING SYSTEM, MACHINE TOOL, INFORMATION PROCESSING SYSTEM, SETTING DATA INHERITANCE METHOD, AND SETTING DATA INHERITANCE PROGRAM**

(30) Priority: 13.12.2019 JP 2019225255
(71) Applicant: DMG Mori Co., Ltd., Yamatokoriyama-shi, Nara 639-1160 (JP)
(72) Inventor: OUCHI, Toshinori, Sapporo-shi, Hokkaido 004-0015 (JP); KIYOTA, Sumihiro, Yamatokoriyama-shi, Nara 639-1160 (JP); IDEUE, Makoto, Yamatokoriyama-shi, Nara 639-1160 (JP); SOGA, Takaaki, Yamatokoriyama-shi, Nara 639-1160 (JP)
(74) Representative: Isarpatent
(86) International application number: PCT/JP2020/044199
(87) International publication number: WO 2021/117505

(57) **Abstract**

A machining system (10) includes an information processing system (200), a first machine tool (100A) communicable with the information processing system (200), and a second machine tool (100B) communicable with the information processing system (200). The information processing system (200) includes a reception unit (252) that receives setting data set in the first machine tool (100A), a storage device (220) that stores the setting data received from the first machine tool (100A), and a transmission unit (250) that transmits the setting data of the first machine tool (100A) stored in the storage device (220) to the second machine tool (100B) in response to a setting data acquisition request, when the setting data is inheritable to the second machine tool (100B). The second machine tool (100B) includes a setting unit (154) that allows the second machine tool (100B) to inherit the setting data received from the information processing system (200).

## Description

### TECHNICAL FIELD

The present disclosure relates to a technique for allowing inheritance of setting data of a machine tool to another machine tool.

### BACKGROUND ART

Japanese Patent Laying-Open No. 2016-71407 (PTL 1) describes a numerical control system that separates a numerical control device into a cloud side and a machine tool side. More specifically, the numerical control system operates software for CNC control, PMC control, and display control on the cloud side, and operates software for servo control and spindle control for operating a machine tool on the machine tool side. Since the software for CNC control, PMC control, and display control is managed on the cloud side, the numerical control system reduces a maintenance cost for each machine tool.

### CITATION LIST

### PATENT LITERATURE

PTL 1: Japanese Patent Laying-Open No. 2016-71407

### SUMMARY OF INVENTION

### TECHNICAL PROBLEM

Meanwhile, there is a need to use setting data of a first machine tool for another second machine tool to use the first machine tool and the second machine tool in the same manner. The numerical control system disclosed in Patent Literature 1 is intended to integrate functions on a cloud, and does not use setting data of a first machine tool for a second machine tool.

In order for a user to use the second machine tool with an operational feel same as that for the first machine tool, it is necessary to set the second machine tool in accordance with the setting of the first machine tool, which takes much time and effort. This time and effort increases as the number of used machine tools increases. Therefore, a technique for using the setting data of the first machine tool in the second machine tool is desired.

### SOLUTION TO PROBLEM

In an example of the present disclosure, a machining system includes an information processing system, a first machine tool communicable with the information processing system, and a second machine tool communicable with the information processing system. The information processing system includes a reception unit that receives setting data set in the first machine tool, a storage device that stores the setting data received from the first machine tool, and a transmission unit that transmits the setting data of the first machine tool stored in the storage device to the second machine tool in response to a setting data acquisition request, when the setting data is inheritable to the second machine tool. The second machine tool includes a setting unit that allows the second machine tool to inherit the setting data received from the information processing system.

According to another aspect of the present disclosure, a machine tool that is communicable with an information processing system storing setting data of another machine tool includes: a transmission unit that transmits a setting data acquisition request to the information processing system; a reception unit that receives the setting data transmitted from the information processing system in response to the setting data acquisition request when the setting data stored in the information processing system is inheritable to the machine tool; and a setting unit that allows the machine tool to inherit the setting data received from the information processing system.

According to still another aspect of the present disclosure, an information processing system communicable with a first machine tool and a second machine tool includes: a reception unit that receives setting data set in the first machine tool; a storage device that stores the setting data received from the first machine tool; and a transmission unit that transmits the setting data of the first machine tool stored in the storage device to the second machine tool in response to a setting data acquisition request, when the setting data is inheritable to the second machine tool.

According to still another aspect of the present disclosure, an inheritance method for allowing inheritance of setting data from a first machine tool to a second machine tool includes: receiving setting data set in the first machine tool; storing the setting data received from the first machine tool into a storage device; and transmitting the setting data of the first machine tool stored in the storage device to the second machine tool in response to a setting data acquisition request, when the setting data is inheritable to the second machine tool.

According to still another aspect of the present disclosure, an inheritance program for allowing inheritance of setting data from a first machine tool to a second machine tool causes an information processing system to execute: receiving setting data set in the first machine tool; storing the setting data received from the first machine tool into a storage device; and transmitting the setting data of the first machine tool stored in the storage device to the second machine tool in response to a setting data acquisition request, when the setting data is inheritable to the second machine tool.

### ADVANTAGEOUS EFFECTS OF INVENTION

The setting data set in the first machine tool can be used in the second machine tool.

### BRIEF DESCRIPTION OF DRAWINGS

Fig. 1 is a diagram illustrating an example of a device configuration of a machining system.
Fig. 2 is a diagram illustrating an example of a functional configuration of the machining system.
Fig. 3 is a diagram illustrating an example of a settings database.
Fig. 4 is a diagram illustrating an example of inheritance possibility information.
Fig. 5 is a diagram illustrating a flow of a setting data inheritance process according to a first modification.
Fig. 6 is a diagram illustrating inheritance possibility information according to the first modification.
Fig. 7 is a diagram illustrating a flow of a setting data inheritance process according to a second modification.
Fig. 8 is a diagram illustrating inheritance possibility information according to the second modification.
Fig. 9 is a diagram illustrating a settings database according to a modification.
Fig. 10 is a schematic diagram illustrating an example of a hardware configuration of a machine tool.
Fig. 11 is a schematic diagram illustrating an example of a hardware configuration of an information processing apparatus.

### DESCRIPTION OF EMBODIMENTS

An embodiment of the present invention will now be described in detail with reference to the drawings. In the following description, the same parts and components are denoted by the same reference signs. Their names and functions are also the same. Therefore, detailed descriptions thereof will not be repeated. Note that the embodiment and modifications described below may be appropriately and selectively combined.

### <A. Device configuration of machining system 10>

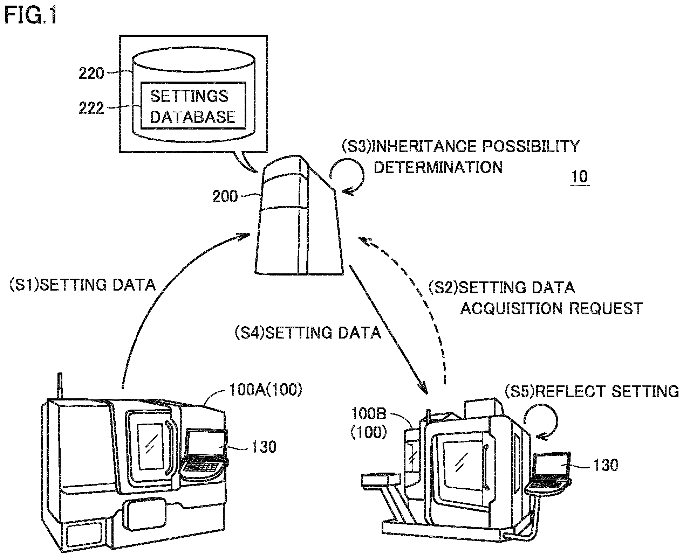

A machining system 10 according to the embodiment will be described with reference to Fig. 1. Fig. 1 is a diagram illustrating an example of a device configuration of machining system 10.

Machining system 10 includes two or more machine tools and one or more information processing systems. In the example of Fig. 1, machining system 10 includes a machine tool 100A, a machine tool 100B, and an information processing system 200.

Machine tool 100A and machine tool 100B may be of the same type or of different types. Hereinafter, when machine tools 100A and 100B are not particularly distinguished, any one of machine tools 100A and 100B is also referred to as a machine tool 100.

Machine tool 100 is a workpiece processing machine. As an example, machine tool 100 is a machine tool that performs subtractive manufacturing (SM) process on a workpiece. Alternatively, machine tool 100 may be a machine tool that performs additive manufacturing (AM) process on a workpiece. Machine tool 100 may also be a vertical or horizontal machining center or turning center. Alternatively, machine tool 100 may be a lathe or another cutting machine or grinding machine. Furthermore, the machine tool may be a combined machine obtained by combining the machines described above.

Information processing system 200 is, for example, an information processing apparatus such as a computer having a server function. As an example, information processing system 200 may be a desktop computer, a notebook computer, or a tablet terminal. Alternatively, information processing system 200 may include a plurality of computers such as distributed servers. Information processing system 200 may include one information processing apparatus or a plurality of information processing apparatuses.

Machine tool 100 and information processing system 200 can communicate with each other. Machine tool 100 and information processing system 200 may be connected in a wireless manner or in a wired manner. As an example, EtherNET (registered trademark) is adopted as a communication standard of machine tool 100 and information processing system 200.

### <B. Overview of inheritance function>

Successively, with reference to Fig. 1, an inheritance process for allowing inheritance of setting data of machine tool 100A (first machine tool) to machine tool 100B (second machine tool) will be described.

For example, suppose that a user using machine tool 100A newly introduces machine tool 100B. At this time, if setting data set in existing machine tool 100A is inherited to newly introduced machine tool 100B, the user can operate machine tool 100B with the same operational feel as that for machine tool 100A. In order to achieve this situation, machining system 10 has a function of allowing inheritance of the setting data set in machine tool 100A to machine tool 100B.

More specifically, in step S1, machine tool 100A receives an uploading operation of uploading the setting data from the user. The uploading operation is received by, for example, an operation panel 130 of machine tool 100A. Machine tool 100A transmits a part or all of the setting data set in machine tool 100A to information processing system 200 in response to the uploading operation.

The setting data transmitted to information processing system 200 includes, for example, at least one of screen setting of machine tool 100A and machining setting related to machining performed by machine tool 100A. The screen setting includes, for example, at least one of a screen configuration on operation panel 130 and character setting related to a screen. The character setting includes, for example, at least one of a language setting, a character color, and a font. The machining setting includes, for example, parameters (for example, an interlock condition or the like) that can be inherited without any trouble, such as numerical control (NC) parameters and PC parameters.

Note that the setting data to be inherited is not limited to the screen setting or the machining setting. Examples of the setting data to be inherited may include a setting related to a calendar, a setting related to a notepad, a conversion history of an input method editor (IME), and a search history (display history) of a G code or an M code. Preferably, setting data by which the operation of machine tool 100 changes before and after the inheritance even if machine tool 100 is operated by the same NC program is excluded from the setting data to be inherited.

Information processing system 200 stores the setting data received from machine tool 100A in a settings database 222 in information processing system 200. Typically, settings database 222 is managed in a storage device 220. Setting data received from a machine tool other than machine tool 100A is also stored in settings database 222.

In step S2, the user performs a setting data inheritance operation on machine tool 100B which is in an initial setting state. In response to this operation, machine tool 100B transmits a setting data acquisition request to information processing system 200.

In step S3, when receiving the setting data acquisition request from machine tool 100B, information processing system 200 acquires setting data that can be inherited to machine tool 100A from among the setting data managed in settings database 222. At this time, when the setting data of machine tool 100A stored in storage device 220 is inheritable to machine tool 100B, information processing system 200 transmits the setting data to machine tool 100B.

In step S4, information processing system 200 transmits the setting data determined to be inheritable in step S3 to machine tool 100B.

In step S5, machine tool 100B inherits the setting data received from information processing system 200. The wording "inheriting" herein means that at least a part or all of the setting data of machine tool 100B is rewritten with the setting data received from machine tool 100A.

With the above inheritance function, the setting data of machine tool 100A is reflected in machine tool 100B, and the user can operate newly introduced machine tool 100B with the same operational feel as that for existing machine tool 100A.

In addition, if there is no inheritance function described above, the user needs to change the setting of machine tool 100B according to the setting of machine tool 100A, or needs to copy the setting data of existing machine tool 100A to a recording medium such as a USB memory and write the setting data in machine tool 100B from the recording medium. The inheritance function described above reduces the labor of the setting operation described above.

In addition, in a case where machine tool 100A and machine tool 100B are in different buildings and setting data is stored and carried using a recording medium, there is also a risk that the recording medium is lost. Such a risk is also eliminated by the above inheritance process.

Note that, although the example in which, in step S2, the setting data acquisition request is input to machine tool 100B that is an inheritance destination has been described with reference to Fig. 1, the acquisition request does not necessarily need to be input to machine tool 100B. As an example, the acquisition request may be input to a user terminal that can communicate with information processing system 200. The user terminal is, for example, a communication terminal such as a desktop computer, a notebook computer, a tablet terminal, or a smartphone.

The user terminal displays a portal site on the basis of an access to information processing system 200. The portal site receives selection of an inheritance source machine tool, selection of an inheritance destination machine tool, selection of setting data to be inherited, and the like. In response to these selections, the user terminal transmits a setting data acquisition request to information processing system 200. Thereafter, information processing system 200 transmits data to be inherited of the designated inheritance source machine tool to the designated inheritance destination machine tool. The inheritance destination machine tool performs a setting data inheritance process on the basis of the setting data received from information processing system 200. Note that the portal site may be displayed on machine tool 100A as the inheritance source or machine tool 100B as the inheritance destination.

In addition, although an example in which the process of uploading the setting data to information processing system 200 from machine tool 100 is executed in response to the user operation has been described with reference to Fig. 1, the execution of the process of uploading the setting data is not limited to be triggered by the user operation. As an example, the setting data of machine tool 100 may be automatically uploaded from machine tool 100 to information processing system 200 according to a predetermined schedule. In this case, machine tool 100 may independently transmit the setting data to information processing system 200, or may transmit the setting data to information processing system 200 in response to an acquisition request from information processing system 200. As another example, the setting data of machine tool 100 may be synchronized with settings database 222. In this case, every time the setting data of machine tool 100 is changed, information processing system 200 rewrites settings database 222 in accordance with the changed setting data.

### <C. Functional configuration>

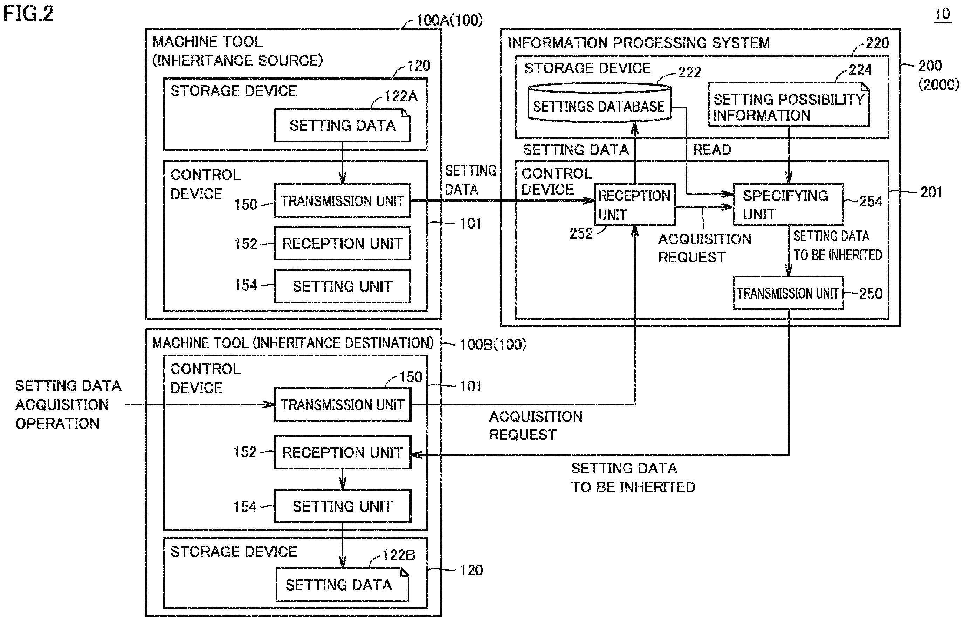

A functional configuration for achieving the above-described inheritance function will be described with reference to Figs. 2 to 4. Fig. 2 is a diagram illustrating an example of a functional configuration of machining system 10.

Machining system 10 includes machine tool 100 and information processing system 200. In the example of Fig. 2, two machine tools 100A and 100B are illustrated as machine tool 100, and one information processing apparatus 2000 is illustrated as information processing system 200.

Machine tool 100 includes a control device 101 and a storage device 120 as a hardware configuration. Control device 101 includes a transmission unit 150, a reception unit 152, and a setting unit 154 as a functional configuration.

Information processing apparatus 2000 includes a control device 201 and a storage device 220 as a hardware configuration. Control device 201 includes a transmission unit 250, a reception unit 252, and a specifying unit 254 as a functional configuration.

Transmission unit 150 is a functional module constituting a part of a communication driver of machine tool 100. Transmission unit 150 implements a transmitting function of machine tool 100.

Reception unit 152 is a functional module constituting a part of the communication driver of machine tool 100. Reception unit 152 implements a receiving function of machine tool 100.

Setting unit 154 is a functional module for updating setting data of machine tool 100. The setting data of machine tool 100 is rewritten by setting unit 154.

Transmission unit 250 is a functional module constituting a part of a communication driver of information processing apparatus 2000. Transmission unit 250 implements a transmitting function of information processing apparatus 2000.

Reception unit 252 is a functional module constituting a part of the communication driver of information processing apparatus 2000. Reception unit 252 implements a receiving function of information processing apparatus 2000.

Specifying unit 254 is a functional module for specifying setting data that can be inherited to machine tool 100 set as an inheritance destination from among the setting data stored in settings database 222.

Hereinafter, processing of each functional configuration in a case where setting data 122A of machine tool 100A is inherited to machine tool 100B will be described.

It is assumed that machine tool 100A receives a setting data upload request from the user. In response to the request, transmission unit 150 of machine tool 100A transmits setting data 122A of machine tool 100A stored in storage device 120 to information processing apparatus 2000. Preferably, transmission unit 150 of machine tool 100A further transmits, to information processing apparatus 2000, identification information for uniquely specifying machine tool 100A that is a transmission source, and identification information of the user who logs in to machine tool 100A that is the transmission source. The identification information of machine tool 100A may be, for example, an IP address of machine tool 100A or an identification (ID) of machine tool 100A. The identification information of the user may be, for example, a user ID such as a user account or a user name.

Reception unit 252 of information processing apparatus 2000 writes setting data 122A received from machine tool 100A into settings database 222 in storage device 220. Preferably, setting data 122A is written in settings database 222 in association with the identification information of machine tool 100A that is the transmission source or the identification information of the user who logs in to machine tool 100A that is the transmission source.

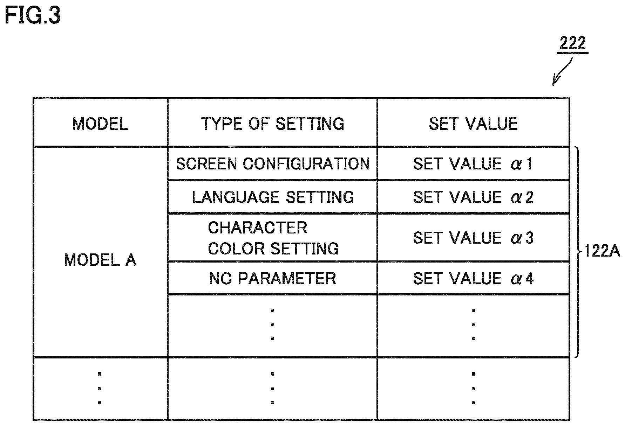

Fig. 3 is a diagram illustrating an example of settings database 222. Settings database 222 defines a set value for each setting item included in the setting data for each model of machine tool. In the example of Fig. 3, setting data 122A of machine tool 100A of a model "A" is written in settings database 222.

Referring again to Fig. 2, it is assumed that machine tool 100B receives a setting data acquisition operation from the user. In response to this operation, transmission unit 150 of machine tool 100B transmits a setting data acquisition request to information processing system 200. The acquisition request includes identification information for uniquely specifying machine tool 100B set as the inheritance destination. The identification information may be, for example, an IP address of machine tool 100B or an identification (ID) of machine tool 100B.

Reception unit 252 of information processing system 200 receives the setting data acquisition request from machine tool 100B, and outputs the acquisition request to specifying unit 254.

In response to the acquisition request, specifying unit 254 refers to inheritance possibility information 224 stored in storage device 220, and specifies setting data that can be inherited to machine tool 100 set as an inheritance destination from among the setting data stored in settings database 222.

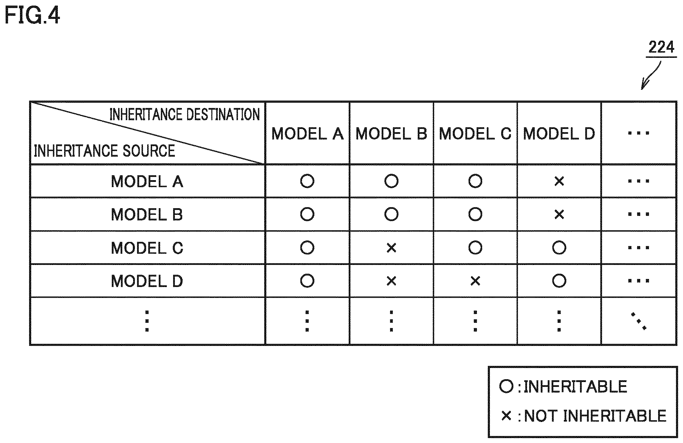

A data structure of inheritance possibility information 224 illustrated in Fig. 2 will be described with reference to Fig. 4. Fig. 4 is a diagram illustrating an example of inheritance possibility information 224.

As illustrated in Fig. 4, in inheritance possibility information 224, possibility of inheritance of setting data from an inheritance source machine tool to an inheritance destination machine tool is defined for each combination of the model of the inheritance source machine tool and the model of the inheritance destination machine tool. The possibility of inheritance in inheritance possibility information 224 may be defined in advance or may be freely set by the user. According to inheritance possibility information 224, applicable setting data is determined according to the combination of the model of the inheritance source machine tool and the model of the inheritance destination machine tool.

As an example, in response to the setting data acquisition request from machine tool 100B, specifying unit 254 specifies the model of the inheritance source machine tool from which the setting data can be inherited to the model of machine tool 100B by referring to inheritance possibility information 224. When machine tool 100B that is the inheritance destination is of the model "B", machine tool 100B can inherit the setting data of machine tools of models "A" and "B", and cannot inherit the setting data of machine tools of models "C" and "D" in the example of Fig. 4.

When there is a plurality of setting data that can be inherited to machine tool 100B, machine tool 100B allows the user of machine tool 100B to select the setting data to be inherited. As an example, setting data 122A of machine tool 100A of model "A" is selected. In response to this selection, specifying unit 254 acquires setting data 122A corresponding to machine tool 100A from the setting data stored in settings database 222, and outputs setting data 122A to transmission unit 250. Transmission unit 250 transmits setting data 122A of machine tool 100A to machine tool 100B.

Reception unit 152 of machine tool 100B outputs setting data 122A received from information processing system 200 to setting unit 154 of machine tool 100B. Setting unit 154 of machine tool 100B rewrites setting data 122B of machine tool 100B on the basis of setting data 122A.

### <D. First modification of inheritance function>

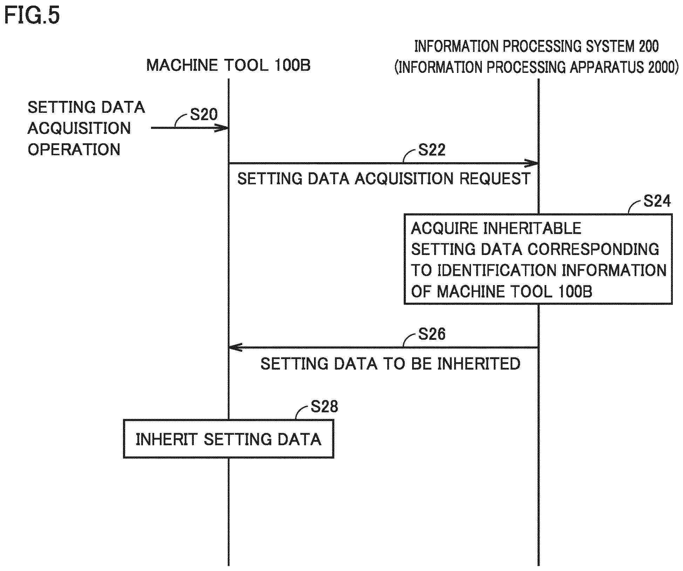

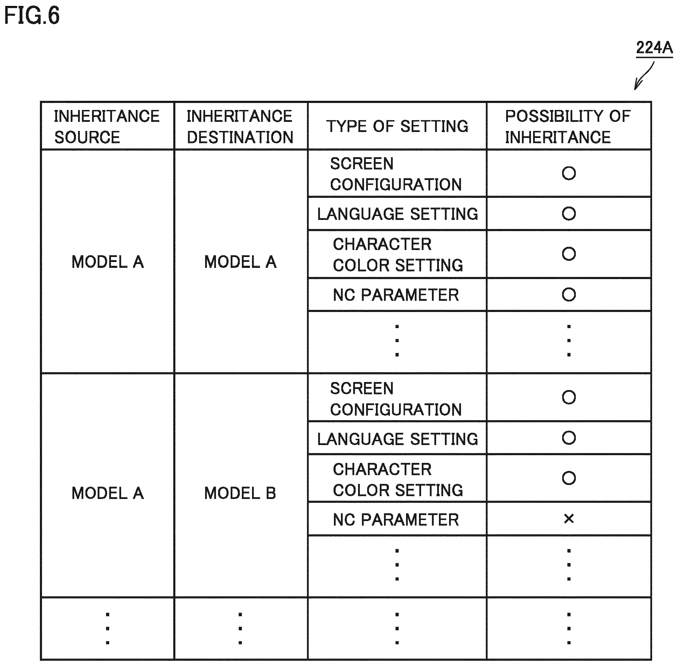

Next, a first modification of the setting data inheritance function will be described with reference to Figs. 5 and 6. Fig. 5 is a diagram illustrating a flow of a setting data inheritance process according to the first modification. In the present modification, whether or not the setting data can be inherited is set for each setting item included in the setting data.

More specifically, in step S20, machine tool 100B receives a setting data acquisition operation from the user. The acquisition operation is performed, for example, on operation panel 130 of machine tool 100B.

In step S22, machine tool 100B transmits a setting data acquisition request to information processing system 200. The acquisition request includes identification information for uniquely specifying machine tool 100B.

In step S24, information processing system 200 refers to inheritance possibility information 224A illustrated in Fig. 6, and acquires setting data to be inherited corresponding to the identification information of machine tool 100B. Fig. 6 is a diagram illustrating inheritance possibility information 224A according to the first modification.

In inheritance possibility information 224A, possibility of inheritance for each setting item included in the setting data is defined in advance for each combination of the model of the inheritance source machine tool and the model of the inheritance destination machine tool. In the example of Fig. 6, "screen configuration", "language setting", and "character color setting" are defined in advance as setting items that can be inherited from the machine tool of model "A" to the machine tool of model "B", and "NC parameter" is defined in advance as a setting item that cannot be set.

As an example, when the setting data of machine tool 100 of model "A" is inherited to machine tool 100B of model "B", information processing system 200 acquires the setting items of "screen configuration", "language setting", and "character color setting" from settings database 222 as the setting data to be inherited.

In one aspect, a tool management screen for managing information regarding each tool is used in a machining center as an example of machine tool 100, and a tool life management screen for managing the life of each tool is used in a turning center as another example of machine tool 100. In this case, when the machining center is designated as an inheritance source and the turning center is designated as an inheritance destination, the tool management screen is not inherited from the machining center to the turning center. On the other hand, when the machining center is designated as both the inheritance source and the inheritance destination, the tool management screen is inherited from the machining center designated as the inheritance source to the machining center designated as the inheritance destination.

Referring again to Fig. 5, in step S26, information processing system 200 transmits the setting data to be inherited specified in step S24 to machine tool 100B.

In step S28, machine tool 100B rewrites the current setting data on the basis of the setting data to be inherited received from information processing system 200.

Preferably, machine tool 100B receives selection of a setting item to be inherited to machine tool 100B from setting items included in the setting data received from information processing system 200. Typically, setting items that can be inherited are listed on a setting screen of machine tool 100B, and the setting screen is configured so that the possibility of inheritance is selectable for each setting item. As a result, the user can freely select a setting item to be inherited and a setting item not to be inherited.

Note that, although the example in which the setting data inheritance process is executed on the basis of the setting data acquisition operation performed by the user has been described with reference to Fig. 5, the timing at which the setting data inheritance process is executed is not limited thereto. As an example, the setting data inheritance process may be automatically executed at the time of introduction of machine tool 100B. Whether or not the setting data inheritance process is executed at the time of introduction is determined, for example, on the basis of whether or not machine tool 100B is currently in an initial setting state. When machine tool 100B is in an initial setting state, machine tool 100B receives whether to acquire the setting data stored in information processing system 200. When the acquisition of the setting data is permitted by the user, the processes of steps S22, S24, S26, and S28 described above are sequentially executed. Thus, when machine tool 100B is activated for the first time after being introduced, the setting data is inherited.

### <E. Second modification of inheritance function>

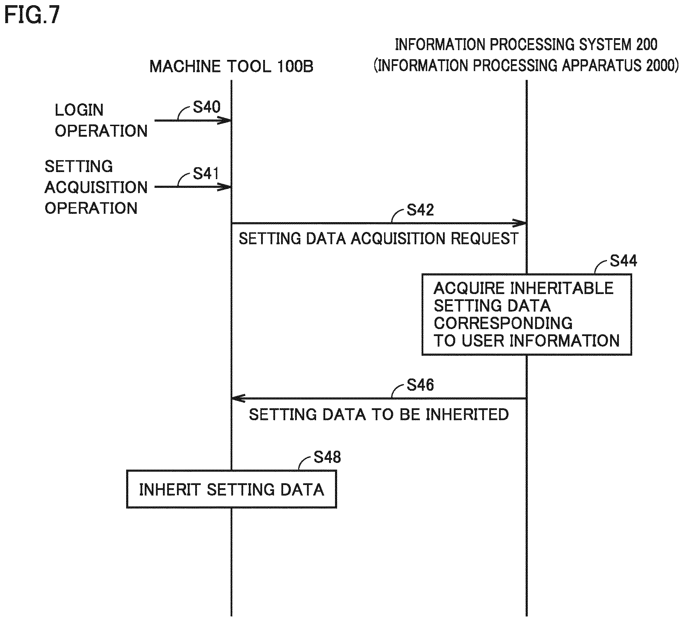

Next, a second modification of the setting data inheritance function will be described with reference to Figs. 7 to 9. Fig. 7 is a diagram illustrating a flow of a setting data inheritance process according to the second modification.

In the example of Fig. 6, possibility of inheritance for each of various setting items included in the setting data is determined for each combination of the model of the inheritance source machine tool and the model of the inheritance destination machine tool. On the other hand, in the present modification, the possibility of inheritance for each of various setting items included in the setting data is determined for each user.

More specifically, in step S40, the user performs a login operation on machine tool 100B. In one aspect, the user performs the login operation by inputting user identification information such as a user name and a password. The input operation is performed, for example, using operation panel 130 of machine tool 100B. In another aspect, the user performs the login operation by inserting a hardware key storing his/her identification information into machine tool 100B. Machine tool 100B reads the identification information of the user from the inserted hardware key.

In step S41, machine tool 100B receives a setting data acquisition operation from the user. The acquisition operation is performed, for example, on operation panel 130 of machine tool 100B.

In step S42, machine tool 100B transmits a setting data acquisition request to information processing system 200. The acquisition request includes identification information of the user who logs in to machine tool 100B. As an example, when a user "B" is logged in to machine tool 100B, the acquisition request includes identification information of user "B".

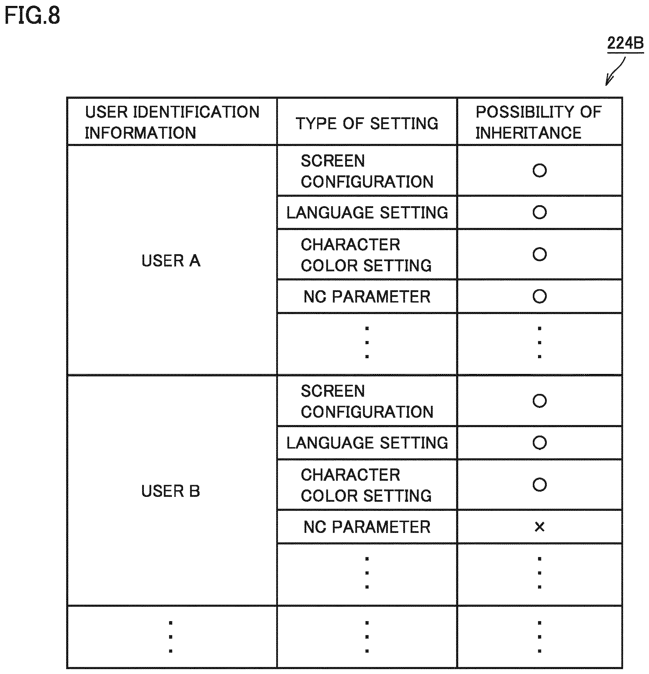

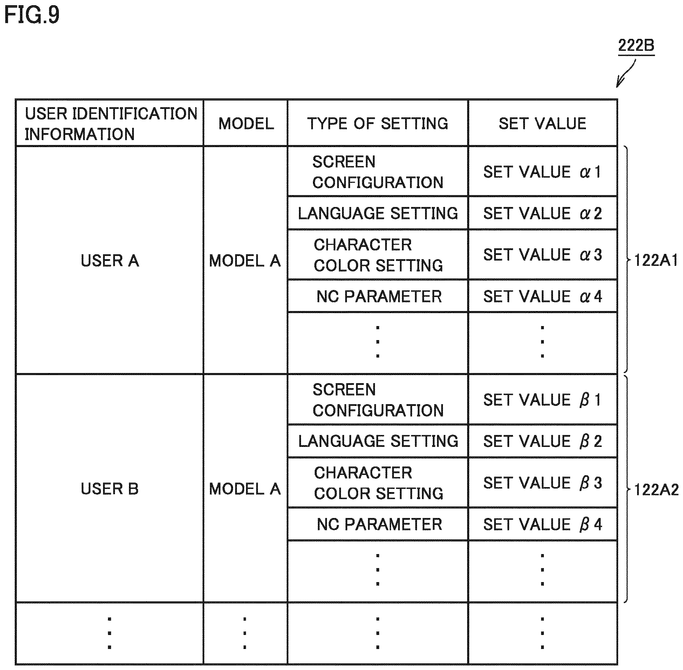

In step S44, information processing system 200 acquires a set value for each setting item to be inherited by referring to inheritance possibility information 224B illustrated in Fig. 8 and a settings database 222B illustrated in Fig. 9.

Fig. 8 is a diagram illustrating inheritance possibility information 224B according to the second modification. In the inheritance possibility information 224B, possibility of inheritance for each of setting items included in the setting data is defined in advance for the identification information of each user.

Fig. 9 is a diagram illustrating settings database 222B which is a modification of settings database 222 illustrated in Fig. 3. Settings database 222B defines setting data for each setting item for each model of machine tool and identification information of each user. In the example of Fig. 9, settings database 222 includes setting data 122A1 for a user "A" for machine tool 100A of model "A" and setting data 122A2 for user "B" for machine tool 100A of model "A".

It is assumed that the identification information of user "B" is included in the acquisition request received in step S42, and user "B" selects machine tool 100A of model "A" as the inheritance source machine tool. In this case, information processing system 200 refers to inheritance possibility information 224B, and specifies "screen configuration", "language setting", and "character color setting" from among the setting items associated with user "B" as the setting items that can be inherited. Thereafter, information processing system 200 refers to settings database 222B to acquire set values α1 to α3 of "screen configuration", "language setting", and "character color setting" associated with the combination of user "B" and model "A".

In step S46, information processing system 200 transmits the setting data to be inherited specified in step S44 to machine tool 100B.

In step S48, machine tool 100B rewrites the current setting data of machine tool 100B on the basis of the setting data to be inherited received from information processing system 200.

Preferably, machine tool 100B receives selection of a setting item to be inherited to machine tool 100B from setting items included in the setting data received from information processing system 200. Typically, setting items that can be inherited are listed on a setting screen of machine tool 100B, and the setting screen is configured so that the possibility of inheritance is selectable for each setting item. As a result, the user can freely select a setting item to be inherited and a setting item not to be inherited.

In addition, machine tool 100B receives selection of a user to whom setting data is to be inherited. As one example, pieces of user identification information are listed on a setting screen of machine tool 100B, and the setting screen is configured so that the possibility of inheritance is selectable for each user identification information. Typically, the selection operation is permitted only to a specific user having management authority.

As described above, in the present modification, transmission unit 250 of information processing system 200 transmits, to machine tool 100B, the setting data associated with the user identification information included in the acquisition request from among the setting data stored in settings database 222B. As a result, the setting data to be inherited can be changed according to the user. As one example, an experienced user can inherit his/her setting data that is set for simplifying operation to machine tool 100B. In addition, a beginner user can inherit his/her setting data that is set to operate the machine tool more safely to machine tool 100B.

Although, in the present modification, the possibility of inheritance is associated with user identification information, the possibility of inheritance may be associated with an access level that is classified into a level permitting an access to the function of the machine tool and a level not permitting the access. Due to the association with the access level, an item that can be inherited to machine tool 100B cannot be inherited to machine tool 100B from the information processing system, if the access level is low. On the other hand, if the access level is high, all items that can be inherited to machine tool 100B can be inherited. For example, machine tool 100B can inherit the screen configuration, the language setting, the character color setting, and the NC parameter of machine tool 100A stored in the information processing system. However, the following configuration is also possible in which, when an access level given to an operator is low, the screen configuration, the language setting, and the character color setting can be inherited, but the NC parameter cannot be inherited.

Furthermore, as another modification, in a machine tool already operating to machine a workpiece or the like, some NC parameters may already be set to values specific to the machine tool. In this case, inheriting the NC parameter from the information processing system to the machine tool that is currently operating to machine the workpiece or the like may affect the machining operation of the machine tool. In view of this, it is also possible to set such that a machine tool already operating to machine a workpiece or the like is permitted to inherit the image configuration, the language setting, the character color setting, and the like, but is not permitted to inherit the NC parameter. On the other hand, it is also possible to set such that, upon setting (for example, initial setting) of a machine tool that does not start operating for machining, settings such as NC parameter, image configuration, language setting, and character color setting can be inherited.

### <F. Hardware configuration of machine tool 100>

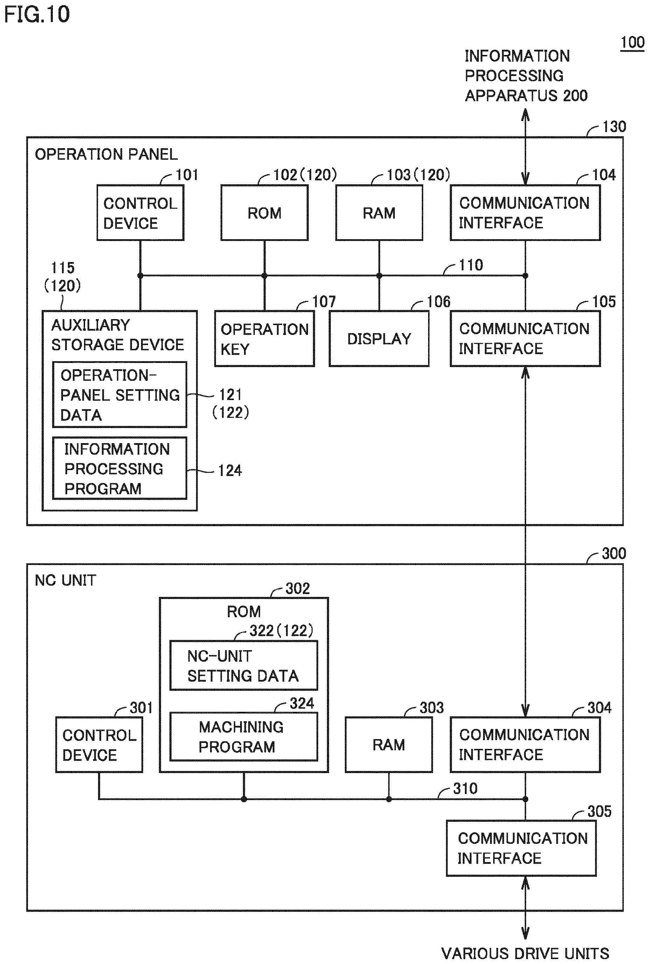

A hardware configuration of machine tool 100 will be described with reference to Fig. 10. Fig. 10 is a schematic diagram illustrating an example of the hardware configuration of machine tool 100.

Machine tool 100 includes operation panel 130 and an NC unit 300. In the following, a hardware configuration of operation panel 130 and a hardware configuration of NC unit 300 will be sequentially described.

### (F1. Hardware configuration of operation panel 130)

Operation panel 130 includes a control device 101, a read only memory (ROM) 102, a random access memory (RAM) 103, communication interfaces 104 and 105, a display 106, an operation key 107, and an auxiliary storage device 115. These components are connected to a bus 110. ROM 102, RAM 103, and auxiliary storage device 115 are examples of above-described storage device 120 (see Fig. 2).

Control device 101 includes, for example, at least one integrated circuit. The integrated circuit may be constituted by, for example, at least one central processing unit (CPU), at least one graphics processing unit (GPU), at least one application specific integrated circuit (ASIC), at least one field programmable gate array (FPGA), or a combination thereof.

Control device 101 controls the operation of operation panel 130 by executing various programs such as an information processing program 124 and an operating system. Information processing program 124 is in charge of a part of the setting data inheritance process. Control device 101 reads information processing program 124 from auxiliary storage device 115 to RAM 103 in response to a command to execute information processing program 124. RAM 103 functions as a working memory, and temporarily stores various pieces of data necessary for executing information processing program 124.

A local area network (LAN), an antenna, and the like are connected to communication interfaces 104 and 105. Operation panel 130 implements communication with an external device such as information processing apparatus 2000 via communication interface 104. In addition, operation panel 130 implements communication with NC unit 300 via communication interface 105.

Display 106 is, for example, a liquid crystal display, an organic EL display, or another display device. Display 106 transmits an image signal for displaying an image to display 106 in accordance with a command from control device 101 or the like. Display 106 includes, for example, a touch panel, and receives various operations on machine tool 100 by a touch operation. Obviously, display 106 that is not a touch panel may be used.

Operation key 107 includes a plurality of hardware keys, and receives various user operations on operation panel 130. A signal corresponding to the pressed key is output to control device 101.

Auxiliary storage device 115 is, for example, a storage medium such as a hard disk or a flash memory. Auxiliary storage device 115 stores operation-panel setting data 121, information processing program 124, and the like. Operation-panel setting data 121 is an example of setting data 122 described above, and defines settings related to various hardware configurations in operation panel 130. Operation-panel setting data 121 and information processing program 124 are not limited to be stored in auxiliary storage device 115, and may be stored in a storage area (for example, cache memory or the like) of control device 101, ROM 102, RAM 103, an external device (for example, a server), or the like.

### (F2. Hardware configuration of NC unit 300)

NC unit 300 includes a control device 301, a ROM 302, a RAM 303, and communication interfaces 304 and 305. These components are connected to a bus 310. ROM 302 and RAM 303 are examples of above-described storage device 120 (see Fig. 2).

Control device 301 includes, for example, at least one integrated circuit. The integrated circuit may be constituted by, for example, at least one CPU, at least one ASIC, at least one FPGA, or a combination thereof.

Control device 301 controls the operation of NC unit 300 by executing various programs such as a machining program 324 and an operating system. Machining program 324 is a program for implementing workpiece machining. Control device 301 reads machining program 324 from ROM 302 to RAM 303 in response to a command to execute machining program 324. RAM 303 functions as a working memory, and temporarily stores various pieces of data necessary for executing machining program 324.

ROM 302 stores NC-unit setting data 322, machining program 324, and the like. NC-unit setting data 322 is an example of setting data 122 described above, and defines settings related to various hardware configurations in NC unit 300 and settings related to a control target of NC unit 300. NC-unit setting data 322 and machining program 324 are not limited to be stored in ROM 302, and may be stored in a storage area (for example, cache memory or the like) of control device 301, RAM 303, an external device (for example, a server), or the like.

A local area network (LAN), an antenna, and the like are connected to communication interfaces 304 and 305. NC unit 300 implements communication with an external device such as operation panel 130 via communication interface 304. In addition, NC unit 300 also implements communication with various drive units (for example, a servo driver that drives a main shaft, etc.) for implementing workpiece machining via communication interface 305.

### <G. Hardware configuration of information processing apparatus 2000>

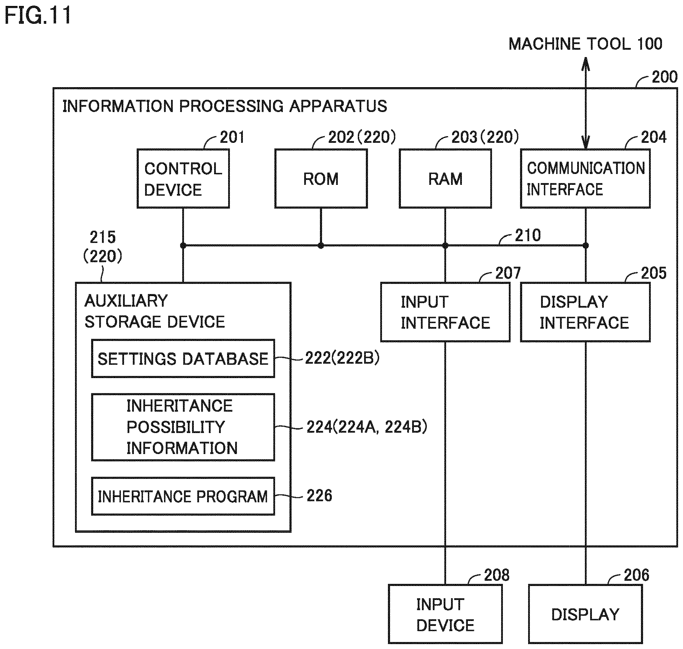

A hardware configuration of information processing apparatus 2000 will be described with reference to Fig. 11. Fig. 11 is a schematic diagram illustrating an example of the hardware configuration of information processing apparatus 2000.

Information processing apparatus 2000 includes control device 201, a ROM 202, a RAM 203, a communication interface 204, a display interface 205, an input interface 207, and an auxiliary storage device 215. These components are connected to a bus 210. ROM 202, RAM 203, and auxiliary storage device 215 are examples of above-described storage device 220 (see Fig. 2).

Control device 201 includes, for example, at least one integrated circuit. The integrated circuit may be constituted by, for example, at least one CPU, at least one GPU, at least one ASIC, at least one FPGA, or a combination thereof.

Control device 201 controls the operation of information processing apparatus 2000 by executing various programs such as an inheritance program 226 and an operating system. Inheritance program 226 is in charge of a part of the setting data inheritance process. Control device 201 reads inheritance program 226 from auxiliary storage device 215 to RAM 203 in response to a command to execute inheritance program 226. RAM 203 functions as a working memory, and temporarily stores various pieces of data necessary for executing inheritance program 226.

A local area network (LAN), an antenna, and the like are connected to communication interface 204. Information processing apparatus 2000 implements communication with an external device such as machine tool 100 via communication interface 204.

Display 206 is connected to display interface 205. Display interface 205 transmits an image signal for displaying an image to display 206 in accordance with a command from control device 101 or the like. Display 206 is, for example, a liquid crystal display, an organic EL display, or another display device. Note that display 206 may be configured integrally with information processing apparatus 2000 or may be configured separately from information processing apparatus 2000.

Input device 208 is connected to input interface 207. Input device 208 is, for example, a mouse, a keyboard, a touch panel, or another device capable of receiving a user operation. Note that input device 208 may be configured integrally with information processing apparatus 2000 or may be configured separately from information processing apparatus 2000.

Auxiliary storage device 215 is, for example, a storage medium such as a hard disk or a flash memory. Auxiliary storage device 215 stores above-described settings database 222, above-described inheritance possibility information 224, inheritance program 226, and the like. These elements are not limited to be stored in auxiliary storage device 215, and may be stored in a storage area (for example, cache memory or the like) of control device 201, ROM 202, RAM 203, an external device (for example, a server), or the like.

### <H. Summary>

As described above, information processing apparatus 2000 collects setting data from various machine tools and manages the setting data as settings database 222. When receiving the setting data acquisition request from machine tool 100B, information processing apparatus 2000 specifies setting data that can be inherited to machine tool 100B from among the setting data included in settings database 222, and transmits the specified setting data to machine tool 100B. Machine tool 100B rewrites the currently set setting data on the basis of the setting data received from information processing apparatus 2000. As a result, setting data of another machine tool is inherited to machine tool 100B, and the user can use machine tool 100B with the same operational feel as that for the other machine tool.

It should be considered that the embodiment disclosed herein is an example in all respects and is not restrictive. The scope of the present invention is defined not by the above description but by the claims, and is intended to include meanings equivalent to the claims and all modifications within the scope.

In addition, the embodiment and the modifications may be independent of each other, or may be compositely combined.

The present application claims priority based on the patent application (Application No. 2019-225255) filed in Japan on December 13, 2019. The contents of the basic application are incorporated herein by reference.

### REFERENCE SIGNS LIST

10: machining system, 100, 100A, 100B: machine tool, 101, 201, 301: control device, 102, 202, 302: ROM, 103, 203, 303: RAM, 104, 105, 204, 304, 305: communication interface, 106, 206: display, 107: operation key, 110, 210, 310: bus, 115, 215: auxiliary storage device, 120, 220: storage device, 121: operation-panel setting data, 122, 122A1, 122A, 122A2, 122B: setting data, 124: information processing program, 130: operation panel, 150, 250: transmission unit, 152, 252: reception unit, 154: setting unit, 200: information processing apparatus, 205: display interface, 207: input interface, 208: input device, 222, 222B: settings database, 224, 224A, 224B: inheritance possibility information, 226: inheritance program, 254: specifying unit, 300: NC unit, 322: NC-unit setting data, 324: machining program, 2000: information processing apparatus

## Claims

1. A machining system comprising:
an information processing system;
a first machine tool communicable with the information processing system; and
a second machine tool communicable with the information processing system,
wherein the information processing system includes:
a reception unit that receives setting data set in the first machine tool,
a storage device that stores the setting data received from the first machine tool, and
a transmission unit that transmits the setting data of the first machine tool stored in the storage device to the second machine tool in response to a setting data acquisition request, when the setting data is inheritable to the second machine tool, and
the second machine tool includes a setting unit that allows the second machine tool to inherit the setting data received from the information processing system.

2. The machining system according to claim 1, wherein
the storage device further stores inheritance possibility information that defines possibility of inheritance of setting data from an inheritance source machine tool to an inheritance destination machine tool for each combination of a model of the inheritance source machine tool and a model of the inheritance destination machine tool,
the information processing system further includes a specifying unit that specifies, in response to the acquisition request, a model of the inheritance source machine tool from which setting data is inheritable to a model of the second machine tool by referring to the inheritance possibility information, and
the transmission unit transmits, to the second machine tool, setting data used in the model specified by the specifying unit from among setting data stored in the storage device.

3. The machining system according to claim 1, wherein the second machine tool receives selection of a setting item to be inherited to the second machine tool for setting items included in the setting data received from the information processing system.

4. The machining system according to claim 1, wherein, when the second machine tool is in an initial setting state, the second machine tool receives whether to acquire the setting data stored in the storage device.

5. The machining system according to claim 1, wherein the setting data stored in the storage device includes at least one of screen setting of the first machine tool and machining setting related to machining of the first machine tool.

6. The machining system according to claim 1, wherein
each of the setting data stored in the storage device is associated with user identification information,
the acquisition request includes identification information of a user logged in to the second machine tool, and
the transmission unit transmits, to the second machine tool, setting data associated with the identification information included in the acquisition request from among the setting data stored in the storage device.

7. The machining system according to claim 1, wherein
the first machine tool includes a first operation panel for operating the first machine tool, the first operation panel having a first screen,
the second machine tool includes a second operation panel for operating the second machine tool, the second operation panel having a second screen,
the setting data stored in the storage device includes first screen setting related to the first screen,
the transmission unit transmits the first screen setting stored in the storage device to the second machine tool in response to a request of acquiring the first screen setting, when the first screen setting is inheritable to the second machine tool, and
the setting unit allows the second machine tool to inherit the first screen setting received from the information processing system.

8. A machine tool that is communicable with an information processing system storing setting data of another machine tool, the machine tool comprising:
a transmission unit that transmits a setting data acquisition request to the information processing system;
a reception unit that receives the setting data transmitted from the information processing system in response to the setting data acquisition request when the setting data stored in the information processing system is inheritable to the machine tool; and
a setting unit that allows the machine tool to inherit the setting data received from the information processing system.

9. An information processing system communicable with a first machine tool and a second machine tool, the information processing system comprising:
a reception unit that receives setting data set in the first machine tool;
a storage device that stores the setting data received from the first machine tool; and
a transmission unit that transmits the setting data of the first machine tool stored in the storage device to the second machine tool in response to a setting data acquisition request, when the setting data is inheritable to the second machine tool.

10. An inheritance method for allowing inheritance of setting data from a first machine tool to a second machine tool, the method comprising:
receiving setting data set in the first machine tool;
storing the setting data received from the first machine tool into a storage device; and
transmitting the setting data of the first machine tool stored in the storage device to the second machine tool in response to a setting data acquisition request, when the setting data is inheritable to the second machine tool.

11. An inheritance program for allowing inheritance of setting data from a first machine tool to a second machine tool, the inheritance program causing an information processing system to execute:
receiving setting data set in the first machine tool;
storing the setting data received from the first machine tool into a storage device; and
transmitting the setting data of the first machine tool stored in the storage device to the second machine tool in response to a setting data acquisition request, when the setting data is inheritable to the second machine tool.
